# EUROPÄISCHE PATENTSCHRIFT

(11) **EP 3 676 143 B1**
(45) Veröffentlichungstag und Bekanntmachung des Hinweises auf die Patenterteilung: **07.07.2021**
(21) Anmeldenummer: 18766140.0
(22) Anmeldetag: 23.08.2018
(51) Int. Cl.: B60T 13/66, B60T 17/22

(54) **VERFAHREN FÜR DIE BESTIMMUNG DES SICHERHEITSRELEVANTEN ZUSTANDS DER BREMSEN BEI SCHIENENFAHRZEUGEN**
METHOD FOR DETERMINING THE SAFETY-RELEVANT STATE OF THE BRAKES OF RAIL VEHICLES
PROCÉDÉ POUR DÉTERMINER L'ÉTAT LIÉ À LA SÉCURITÉ DES FREINS DANS DES VÉHICULES FERROVIAIRES

(30) Priorität: 31.08.2017 DE 102017215290
(43) Veröffentlichungstag der Anmeldung: 08.07.2020
(73) Patentinhaber: KNORR-BREMSE Systeme für Schienenfahrzeuge GmbH, 80809 München (DE)
(72) Erfinder: VOLLMER, Achim, 82041 Deisenhofen (DE); SÜSSMANN, Alexander, 86482 Aystetten (DE)
(86) Internationale Anmeldenummer: PCT/EP2018/072765
(87) Internationale Veröffentlichungsnummer: WO 2019/042859

(56) Entgegenhaltungen:
- DE-A1-102009 042 965

## Beschreibung

Schienenfahrzeuge gemäß des Standes der Technik weisen eine Notbremsvorrichtung auf. Für die Verteilung eines Notbremssignals ist eine zugweit kommunizierende Druckluftleitung und/oder eine elektronische Sicherheitsschleife vorgesehen. Falls eine Notbremsung ausgelöst wird, wird das Notbremssignal an alle Bremskrafterzeuger des Schienenfahrzeugs weitergeleitet, um eine Notbremsung auszulösen.

Hierbei wird zwischen aktiven und passiven Systemen unterschieden. Bei aktiven Systemen wird dann eine Bremsung ausgelöst, falls Druckluft an die Bremskrafterzeuger geleitet wird. Im Gegensatz dazu liegt bei passiven Systemen ständig Druckluft am Bremskrafterzeuger an. Eine Bremsung wird bei diesen Systemen dann ausgelöst, wenn die Druckluftleitung entlüftet wird, und eine durch die Druckluft vorgespannte Feder entlastet wird. Im Stand der Technik sind darüber hinaus außerdem hydraulische Bremssysteme mit einer analogen Funktionsweise zu dem oben beschriebenen Druckluftsystem bekannt. Im Nachfolgenden wird zur Vereinfachung allerdings lediglich auf Druckluftsysteme eingegangen.

Für die Auslegung der Bremsanlage bei aktiven Systemen muss folglich berücksichtigt werden, dass bei einer Bremsung einige der Bremskrafterzeuger ausfallen könnten, aufgrund einer Störung in der Druckluftleitung. Somit muss die Bremsanlage überdimensioniert ausgelegt werden, um einen ausgefallenen Bremskrafterzeuger zu kompensieren. Gemäß des Standes der Technik ist es nicht möglich, die Funktionsfähigkeit der Bremskrafterzeuger in einem Zustand zu überprüfen, indem keine Bremsanforderung umgesetzt wird.

Falls im Gegensatz dazu bei passiven Systemen eine Störung der Druckluftverteilung an einem der Bremskrafterzeuger vorliegt, ergibt sich ein anderes Problem. Denn der Bremskrafterzeuger beginnt darauffolgend mit einer Bremsung, die während des normalen Betriebs, falls also keine Bremsanforderung und insbesondere keine Notbremsung umgesetzt werden soll, unerwünscht ist.

Problematisch ist also eine Situation, in welcher keine Notbremsung ausgelöst werden soll, aber aufgrund einer lokalen Störung an einem der Bremskrafterzeuger keine Druckluft bzw. kein elektronisches Signal an diesem anliegt. Hierbei löst der Bremskrafterzeuger eine Notbremsung aus, obwohl kein Notbremssignal vorliegt, obwohl der Bremskrafterzeuger also gar nicht bremsen soll. Dies führt zu betrieblichen Einschränkungen oder zumindest zu betrieblichem Aufwand am Schienenfahrzeug.

Die DE 10 2009 042 965 A1 beschreibt ein Bremssystem mit intelligentem Aktuator zum Abbremsen eines schienengeführten Fahrzeugs. Dabei können Aktuatoren an eine elektrische Sicherheitsschleife zum Übertragen von Steuersignalen angeschlossen sein, die zum Auslösen eines Notbremsbefehls dienen kann.

Es ist eine Aufgabe der Erfindung, wenigstens einen der oben beschriebenen Nachteile zu beheben. Diese Aufgabe wird durch die nebengeordneten Ansprüche gelöst. Vorteilhafte Weiterbildungen sind Gegenstand der Unteransprüche.

Anhand der nachfolgenden Figuren werden Ausführungsbeispiele der Erfindung gezeigt.
Fig. 1 zeigt ein Flussdiagramm für ein erfindungsgemäßes Verfahren in einer ersten Ausführungsform.
Fig. 2 zeigt ein Flussdiagramm für ein erfindungsgemäßes Verfahren in einer zweiten Ausführungsform.
Fig. 3a zeigt ein Flussdiagramm für ein erfindungsgemäßes Verfahren in einer dritten Ausführungsform.
Fig. 3b zeigt ein Flussdiagramm für ein erfindungsgemäßes Verfahren in einer vierten Ausführungsform.
Fig. 4 zeigt ein Diagramm Verzögerung über Zeit.
Fig. 5 zeigt ein weiteres Diagramm Verzögerung über Zeit.

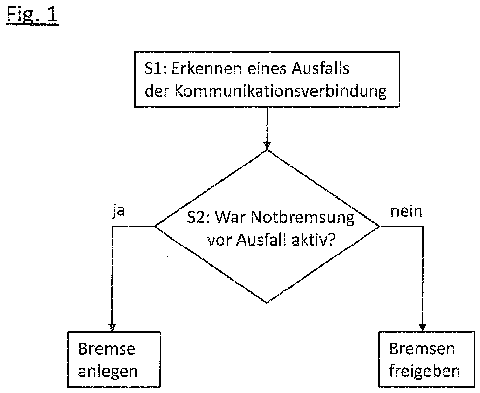

**Fig. 1** zeigt ein erfindungsgemäßes Notbremsverfahren. In einem ersten Schritt S1 wird erkannt, dass die Kommunikationsverbindung eines Bremskrafterzeugers (zum Kommunizieren mit dem Gesamtsystem des Schienenfahrzeugs) ausgefallen ist. Um dies zu erkennen, kommuniziert der Bremskrafterzeuger mit dem Gesamtsystem des Schienenfahrzeugs und/oder mit den restlichen Bremskrafterzeugern des Schienenfahrzeugs. Falls die Kommunikation wie in dem gezeigten Zustand ausgefallen ist, erhält der Bremskrafterzeuger auch keine Information mehr darüber, ob aktuell eine Notbremsung ausgeführt werden soll oder nicht. Gemäß den Sicherheitsanforderungen an Schienenfahrzeuge muss gewährleistet werden, dass bei einer eingeleiteten Notbremsung eine maximale Verzögerung des Schienenfahrzeugs erreicht wird. Folglich muss der einzelne Bremskrafterzeuger, dessen Kommunikationsmöglichkeit ausgefallen ist, eine Entscheidung darüber treffen, ob er aktuell eine Notbremsung auszuführen hat oder nicht.

Gemäß dem in Fig. 1 gezeigten Ausführungsbeispiel trifft der Bremskrafterzeuger seine Entscheidung anhand des Kriteriums, ob vor dem Ausfall seiner Kommunikationsmöglichkeit eine Notbremsung durchgeführt wurde oder nicht. Falls also vor Ausfall der Kommunikationsmöglichkeit eine Notbremsung eingeleitet wurde, geht der Bremskrafterzeuger erfindungsgemäß davon aus, dass die Anforderung an eine Notbremsung nach wie vor besteht. Folglich leitet der Bremskrafterzeuger eine Notbremsung ein, bzw. behält diese aufrecht. Falls vor dem Ausfall seiner Kommunikationsmöglichkeit keine Notbremsung durchgeführt wurde, so geht der Bremskrafterzeuger davon aus, dass auch aktuell keine Anforderung an eine Notbremsung vorliegt, und gibt die Bremsen frei. Diese Entscheidung wird in einem Schritt S2 getroffen.

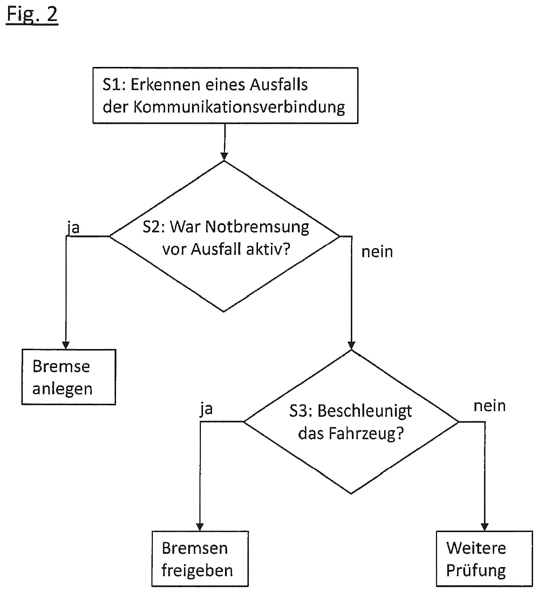

**Fig. 2** zeigt eine Weiterbildung des Ausführungsbeispiels aus Fig. 1. Falls gemäß dieses Ausführungsbeispiels der Bremskrafterzeuger im Schritt S2 erkennt, dass vor dem Ausfall seiner Kommunikationsmöglichkeiten keine Anforderung an eine Notbremsung vorlag, so geht der Bremskrafterzeuger in diesem Fall nicht sofort davon aus, dass die Bremsen bereits aufgrund dieses Kriteriums freigegeben werden sollen. Vielmehr führt der Bremskrafterzeuger daraufhin einen weiteren Prüfungsschritt aus. Er prüft in einem Schritt S3, ob das Schienenfahrzeug zum aktuellen Zeitpunkt beschleunigt. Denn gemäß den Sicherheitssystemen eines Schienenfahrzeugs werden im Falle einer Notbremsung alle Antriebseinheiten des Schienenfahrzeugs deaktiviert, sodass dieses keinesfalls beschleunigt, falls eine Notbremsung eingeleitet wurde. Hierzu kann der Bremskrafterzeuger einen eigenen Beschleunigungssensor aufweisen, um die Beschleunigungs- bzw. Verzögerungswerte des Schienenfahrzeugs auch bei ausgefallener Kommunikation erkennen zu können. Falls in dem Schritt S3 erkannt wird, dass das Fahrzeug beschleunigt, sich seine Geschwindigkeit folglich erhöht, ist sichergestellt, dass keine Anforderung an eine Notbremsung zum aktuellen Zeitpunkt vorliegt. Folglich entscheidet der Bremskrafterzeuger, die Bremsen freizugeben.

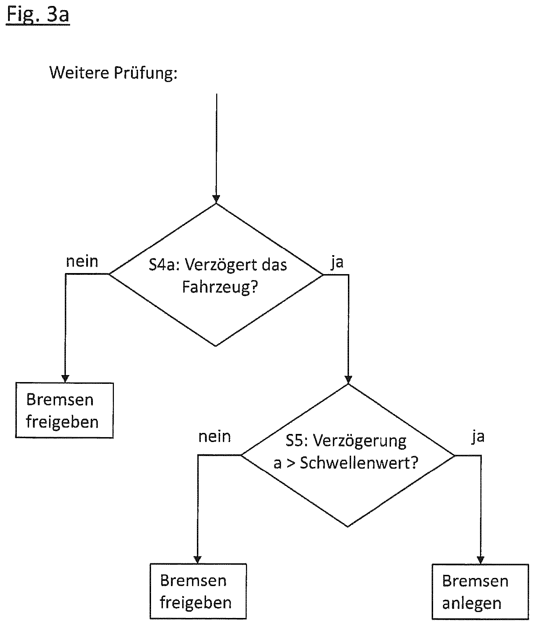

Falls in dem Schritt S3 erkannt wird, dass das Fahrzeug nicht beschleunigt, dass sich die Geschwindigkeit des Fahrzeugs also nicht erhöht, folgt eine weitere Prüfung. Diese ist in **Fig. 3a** dargestellt:
In einem Schritt S4a wird ermittelt, ob das Fahrzeug zum aktuellen Zeitpunkt verzögert wird (negativ beschleunigt wird). Denn falls der Bremskrafterzeuger mit ausgefallener Kommunikationsmöglichkeit erkennt, dass das Fahrzeug verzögert wird, deutet dies darauf hin, dass aktuell eine Notbremsung ausgeführt werden soll. Denn in einem solchen Fall führen die restlichen Bremskrafterzeuger des Schienenfahrzeugs, bei denen die Kommunikationsmöglichkeit nicht ausgefallen ist, eine Notbremsung aus und verzögern das Fahrzeug. Falls der Bremskrafterzeuger mit ausgefallener Kommunikationsmöglichkeit aber erkennt, dass das Fahrzeug zum aktuellen Zeitpunkt nicht verzögert wird, ist hierdurch sichergestellt, dass auch die restlichen Bremskrafterzeuger des Schienenfahrzeugs keine Notbremsung ausführen. Folglich gibt der Bremskrafterzeuger mit ausgefallener Kommunikationsmöglichkeit in diesem Fall die Bremsen frei.

Falls der Bremskrafterzeuger mit ausgefallener Kommunikationsmöglichkeit in dem Schritt S4a allerdings erkennt, dass das Fahrzeug zum aktuellen Zeitpunkt verzögert wird (negativ beschleunigt wird) deutet dies darauf hin, dass aktuell eine Notbremsung durchgeführt werden soll. Nun gilt es für den Bremskrafterzeuger, zu unterscheiden, ob die restlichen Bremskrafterzeuger mit funktionierender Kommunikation lediglich eine gewöhnliche Betriebsbremsung durchführen, oder ob tatsächlich die Anforderung an eine Notbremsung besteht. Diese Unterscheidung trifft der Bremskrafterzeuger in einem Schritt S5 anhand eines Vergleichs des aktuell gemessenen Verzögerungswertes a mit einem Schwellenwert. Falls die aktuelle Verzögerung a größer bzw. stärker als ein Schwellenwert ist, entscheidet der Bremskrafterzeuger, dass aktuell eine Anforderung an eine Notbremsung vorliegt, und führt eine Bremsung durch.

Hierbei wird angemerkt, dass der Schwellenwert beispielsweise bei -1,3 m/s² liegen kann, und die maximale Verzögerung eines Schienenfahrzeugs bei -1,5 m/s² liegen kann. Aus mathematischer Sicht wäre in diesem Fall zwar -1,3 m/s² > -1,5 m/s², was bei der vorliegenden technischen Anwendung allerdings keinen Sinn ergibt. Vielmehr sollen bei der vorliegenden Anwendung die Vorzeichen des Beschleunigungswertes bei einer Verzögerung nicht beachtet werden, sondern es soll der Betrag des Beschleunigungswertes bei einer Verzögerung mit dem Betrag des Beschleunigungswertes des Schwellenwertes verglichen werden. Im oben genannten Beispiel ist der Betrag der (negativen) Beschleunigung von -1,5 m/s² also größer als der Betrag der (negativen) Beschleunigung von -1,3 m/s². In dem Schritt S5 wird also verglichen, ob das Schienenfahrzeug aktuell stärker verzögert als es mit einem vorher festgelegten Schwellenwert verzögern würde.

Falls der Bremskrafterzeuger in diesem Schritt erkennt, dass das Schienenfahrzeug nicht stärker verzögert als der Schwellenwert, so geht der Bremskrafterzeuger ohne Kommunikationsmöglichkeit von einer gewöhnlichen Betriebsbremsung durch die restlichen Bremskrafterzeuger mit funktionierender Kommunikationsmöglichkeit aus, und leitet keine Notbremsung ein. Falls der Bremskrafterzeuger allerdings erkennt, dass das Schienenfahrzeug aktuell stärker verzögert als ein Schwellenwert, so geht der Bremskrafterzeuger von einer aktuellen Anforderung an eine Notbremsung aus, und bremst ebenfalls.

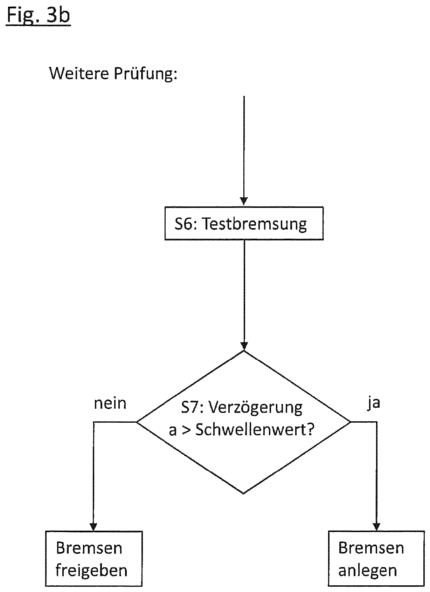

In einem weiteren Ausführungsbeispiel ermittelt der Bremskrafterzeuger ohne Kommunikationsmöglichkeit auf eine alternative Art und Weise, ob aktuell die Anforderung an eine Notbremsung vorliegt, wie in **Fig. 3b** gezeigt. Das Verfahren gemäß dieses Ausführungsbeispiels kann sich an das Verfahren gemäß Fig. 2 an Schritt S3 anschließen, wenn ermittelt wurde, dass das Fahrzeug aktuell nicht beschleunigt ("Weitere Prüfung").

Das Verfahren gemäß Fig. 3b kann sich allerdings auch an das Verfahren gemäß Fig. 3a anschließen, falls in dem Schritt S4a nicht ermittelt werden kann, ob das Fahrzeug aktuell verzögert oder nicht (dieser Pfad ist in Fig. 3a nicht dargestellt).

Gemäß dem in Fig. 3b dargestellten Verfahren führt der Bremskrafterzeuger ohne Kommunikationsmöglichkeit für einen festgelegten Zeitraum eine Testbremsung durch (Schritt S6). Während der Testbremsung ermittelt der Bremskrafterzeuger mit seinem Beschleunigungssensor in einem Schritt S7 die aktuelle Verzögerung des Schienenfahrzeugs und vergleicht diese mit einem Schwellenwert, wie bereits obenstehend analog beschrieben.

Falls das Schienenfahrzeug während der Testbremsung weniger stark verzögert als durch den Schwellenwert vorgegeben, kann der Bremskrafterzeuger hierdurch schlussfolgern, dass die restlichen Bremskrafterzeuger mit funktionierender Kommunikation zum aktuellen Zeitpunkt keine Notbremsung ausführen. Demzufolge führt auch der Bremskrafterzeuger ohne Kommunikationsmöglichkeit keine Notbremsung aus und gibt die Bremse frei. Falls das Schienenfahrzeug allerdings stärker verzögert als der Schwellenwert, so geht der Bremskrafterzeuger ohne Kommunikationsmöglichkeit von einer bestehenden Notbremsanforderung aus, und bremst ebenfalls.

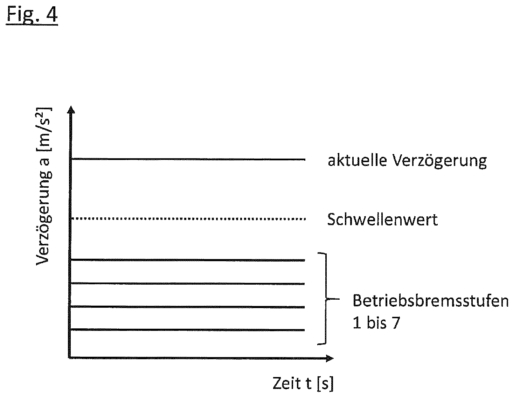

**Fig. 4** zeigt ein Diagramm mit dargestellter Verzögerung (y-Achse) über der Zeit (x-Achse), in welchem einer der oben genannten Schwellenwerte dargestellt ist. Im Diagramm sind verschiedene Betriebsbremsstufen dargestellt, die den Verlauf Verzögerung über Zeit für verschiedene Bremsvorgänge zeigen, die im normalen Betriebsablauf eines Schienenfahrzeugs vorkommen. Zur Vereinfachung sind die Verläufe im Diagramm als Konstanten eingezeichnet. In der Realität allerdings verändert sich die für eine Bremsstufe festgelegte Verzögerung mit der Geschwindigkeit des Schienenfahrzeugs, was die hier gegebene Beschreibung allerdings nur unnötig verkomplizieren würde. Anhand des gezeigten Diagramms wird dargestellt, dass die Schwellenwert-Verzögerung oberhalb der Verzögerungen der verschiedenen Betriebsbremsstufen liegt. Des Weiteren liegt die im Diagramm dargestellte aktuelle Verzögerung oberhalb des Schwellenwertes. Somit wird ein Zustand gezeigt, indem eine Notbremsung ausgeführt wird.

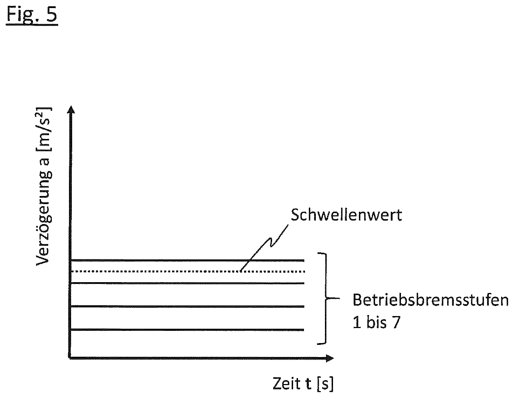

**Fig. 5** zeigt ein Diagramm mit einem alternativ festgelegten Schwellenwert. In diesem Ausführungsbeispiel liegt der Schwellenwert zwischen zweien der Betriebsbremsstufen, beispielsweise zwischen den Betriebsbremsstufen 5 und 6 oder 6 und 7. Die Schwellenwerte können vorab festgelegt werden, anhand des Bremsvermögens eines Schienenfahrzeugs. Des Weiteren können die Schwellenwerte projektspezifisch vorab festgelegt werden.

Für die nachfolgende Erklärung wird angenommen, dass der Schwellenwert zwischen den Betriebsbremsstufen 5 und 6 liegen soll. Beim Ausführen des Verfahrensschritts S5 (siehe Fig. 3a) oder des Verfahrensschritts S7 (siehe Fig. 3b) wird, wie bereits oben beschrieben, überprüft, ob die aktuelle Verzögerung größer ist als der Schwellenwert. Falls die aktuelle Bremsanforderung des Schienenfahrzeugs bei der Betriebsbremsstufe 6 liegt, wird folglich in den erwähnten Verfahrensschritten festgestellt, dass die aktuelle Verzögerung größer ist als der Schwellenwert (der zwischen 5 und 6 liegt). Ein Bremskrafterzeuger mit ausgefallener Kommunikation würde in diesem Fall also erkennen, dass eine Notbremsung ausgeführt werden soll, und entscheidet, dass gebremst wird. In diesem Fall liegt allerdings keine Anforderung an eine Notbremsung vor, es soll lediglich mit der Betriebsbremsstufe 6 gebremst werden. Um dieses Problem zu lösen, werden in einem nicht gezeigten Ausführungsbeispiel die Verfahrensschritte S3, S4a, S5 oder die Verfahrensschritte S4a, S5 oder lediglich der Verfahrensschritt S5 iterativ durchgeführt. Hierdurch wird erreicht, dass der Bremskrafterzeuger mit ausgefallener Kommunikation die Bremse wieder löst, falls das Fahrzeug entweder wieder beschleunigt (S3), oder nicht mehr verzögert (S4a), oder die Verzögerung wieder unterhalb des Schwellenwertes liegt (S5).

Ein Verfahren gemäß eines weiteren nicht gezeigten Ausführungsbeispiels unterscheidet sich von den oben beschriebenen Ausführungsbeispielen lediglich dadurch, dass während des Verfahrens die Bremsscheibentemperatur des Bremskrafterzeugers mit ausgefallener Kommunikation überwacht wird. Wenn bei einem oder bei mehreren der Verfahrensschritte der bisherigen Ausführungsformen entschieden wird, dass gebremst wird, werden gemäß dieses Ausführungsbeispiels die Bremsen wieder freigegeben, falls die Bremsscheibentemperatur einen festgelegten Temperaturwert übersteigt, um ein Überhitzten der Bremsscheiben zu vermeiden.

Erfindungsgemäß weist der Bremskrafterzeuger eine Kommunikationsvorrichtung und einen ihm zugeordneten Beschleunigungssensor auf, um auch ohne Kommunikationsmöglichkeit die aktuelle Beschleunigung des Fahrzeugs erfassen und auswerten zu können. Gemäß einer weiteren nicht dargestellten Ausführungsform weist der Bremskrafterzeuger darüber hinaus eine eigene Stromversorgung mit einem Energiespeicher, beispielsweise einem Akkumulator oder Kondensator auf, um darüber hinaus von einem Ausfall der Stromversorgung durch das Schienenfahrzeug unabhängig zu sein.

Wenn im Vorangegangenen beschrieben wird, dass ein Bremskrafterzeuger eine Notbremsung einleitet oder ausführt, so ist dieser Verfahrensschritt nicht explizit auf eine Notbremsung festgelegt. Vielmehr kann der Bremskrafterzeuger alternativ dazu auch eine geringere Bremskraft als zum Ausführen einer Notbremsung erzeugen, und beispielsweise mit einer vorher festgelegten Bremskraft bremsen.

## Patentansprüche

1. Notbremsverfahren für einen Bremskrafterzeuger eines Schienenfahrzeugs, aufweisend die Schritte:
- S1: Erkennen, dass die Kommunikationsverbindung des Bremskrafterzeugers ausgefallen ist,
- S2: Prüfen, ob vor Ausfall der Kommunikationsverbindung eine Notbremsung aktiv war,
- Entscheiden, zu bremsen, falls vor Ausfall der Kommunikationsverbindung eine Notbremsung aktiv war.

2. Notbremsverfahren gemäß dem vorhergehenden Anspruch, zusätzlich aufweisend die Schritte:
- S3: Prüfen, ob das Schienenfahrzeug beschleunigt, falls vor Ausfall der Kommunikationsverbindung keine Notbremsung aktiv war,
- Entscheiden, nicht zu bremsen, falls das Schienenfahrzeug beschleunigt.

3. Notbremsverfahren gemäß einem der vorhergehenden Ansprüche, zusätzlich aufweisend die Schritte:
- S4a: Prüfen, ob das Schienenfahrzeug verzögert, falls vor Ausfall der Kommunikationsverbindung keine Notbremsung aktiv war,
- Entscheiden, nicht zu bremsen, falls das Schienenfahrzeug nicht verzögert.

4. Notbremsverfahren gemäß dem vorhergehenden Anspruch, zusätzlich aufweisend die Schritte:
- S5: Prüfen, ob die Verzögerung a des Schienenfahrzeugs einen Schwellenwert übersteigt,
- Entscheiden, nicht zu bremsen, falls die Verzögerung a den Schwellenwert nicht übersteigt,
- Entscheiden, zu bremsen, falls die Verzögerung a den Schwellenwert übersteigt.

5. Notbremsverfahren gemäß einem der vorhergehenden Ansprüche, zusätzlich aufweisend die Schritte:
- S6: Durchführen einer Testbremsung,
- S7: Überwachen der Verzögerung a während der Testbremsung
- Entscheiden, zu bremsen, falls die Verzögerung a den Schwellenwert übersteigt,
- Entscheiden, nicht zu bremsen, falls die Verzögerung a den Schwellenwert nicht übersteigt.

6. Notbremsverfahren gemäß einem der vorhergehenden Ansprüche, zusätzlich aufweisend die Schritte:
- Lösen der Bremse, falls nicht entschieden werden kann, ob das Schienenfahrzeug während einer Testbremsung verzögert oder nicht,
- Überwachen und Bewerten der Verzögerungsänderung durch Lösen der Bremse,
- Entscheiden zu bremsen oder nicht zu bremsen.

7. Notbremsverfahren gemäß einem der vorhergehenden Ansprüche, zusätzlich aufweisend die Schritte:
- Überwachen der Temperatur des Bremskrafterzeugers,
- Lösen der Bremse, falls die Temperatur des Bremskrafterzeugers während des Bremsens einen vorbestimmten Wert übersteigt.

8. Bremskrafterzeuger eines Schienenfahrzeugs, das dazu konfiguriert ist, das Verfahren gemäß einem der vorhergehenden Ansprüchen auszuführen, aufweisend
- eine Kommunikationsvorrichtung.

9. Bremskrafterzeuger gemäß dem vorhergehenden Anspruch, des Weiteren aufweisend
- einen Beschleunigungssensor.

10. Bremskrafterzeuger gemäß einem der Ansprüche 8 bis 9, des Weiteren aufweisend
- einen Energiespeicher.

11. Bremskrafterzeuger gemäß einem der Ansprüche 8 bis 10, des Weiteren aufweisend
- einen Temperatursensor.

12. Schienenfahrzeug mit wenigstens einem Bremskrafterzeuger gemäß einem der Ansprüche 8 bis 11, das zum Ausführen des Verfahrens gemäß einem der Ansprüche 1 bis 7 konfiguriert ist.

## Claims

1. Emergency braking method for a braking force generator of a rail vehicle, comprising the steps:
- S1: recognising that the communication connection of the braking force generator has failed,
- S2: checking whether before the failure of the said communication connection an emergency braking process was active,
- deciding to brake if an emergency braking process was active before the failure of the communication connection.

2. Emergency braking method according to the preceding claim, additionally comprising the steps:
- S3: checking whether the rail vehicle is accelerating, if no emergency braking process was active before the failure of the communication connection,
- deciding not to brake if the rail vehicle is accelerating.

3. Emergency braking method according to either of the preceding Claims, additionally comprising the steps:
- S4a: checking whether the rail vehicle is decelerating, if no emergency braking process was active before the failure of the communication connection,
- deciding not to brake if the rail vehicle is decelerating.

4. Emergency braking method according to the preceding claim, additionally comprising the steps:
- S5: checking whether the deceleration a of the rail vehicle exceeds a threshold value,
- deciding to brake if the deceleration a exceeds the said threshold value.

5. Emergency braking method according to any of the preceding claims, additionally comprising the steps:
- S6: carrying out a test braking process,
- S7: monitoring the deceleration a during the test braking process,
- deciding to brake if the deceleration a exceeds the threshold value,
- deciding not to brake if the deceleration a does not exceed the threshold value.

6. Emergency braking method according to any of the preceding claims, additionally comprising the steps:
- releasing the brakes if it cannot be decided whether the rail vehicle is decelerating or not during a test braking process,
- monitoring and evaluating the deceleration change due to the releasing of the brakes,
- deciding to brake or not to brake.

7. Emergency braking method according to any of the preceding claims, additionally comprising the steps:
- monitoring the temperature of the braking force generator,
- releasing the brakes if the temperature of the braking force generator exceeds a predetermined value during the braking process.

8. Braking force generator of a rail vehicle, which is configured to carry out the method according to any of the preceding claims, and which comprises:
- a communication device.

9. Braking force generator according to the preceding claim, further comprising:
- an acceleration sensor.

10. Braking force generator according to either of Claims 8 or 9, further comprising:
- an energy accumulator.

11. Braking force generator according to any of Claims 8 to 10, further comprising:
- a temperature sensor.

12. Rail vehicle with at least one braking force generator according to any of Claims 8 to 11, which is configured so as to carry out the method according to any of Claims 1 to 7.

## Revendications

1. Procédé de freinage d'urgence pour un dispositif de production d'une force de freinage d'un véhicule ferroviaire, comportant les stades :
- S1 : Détection que la liaison de communication du dispositif de production d'une force de frein est défaillante,
- S2 : Contrôle du point de savoir si avant la défaillance de la liaison de communication un freinage d'urgence était actif,
- Décision de freiner si avant la défaillance de la liaison de communication un freinage d'urgence était actif.

2. Procédé de freinage d'urgence suivant la revendication précédente comportant en outre les stades :
- S3 : Contrôle du point de savoir si le véhicule ferroviaire accélère, dans le cas où avant la défaillance de la liaison de communication, un freinage d'urgence n'était pas actif,
- Décision de ne pas freiner si le véhicule ferroviaire accélère.

3. Procédé de freinage d'urgence suivant l'une des revendications précédentes comportant en outres les stades :
- S4a : Contrôle du point de savoir si le véhicule ferroviaire décélère, dans le cas où avant la défaillance de la liaison de communication un freinage d'urgence n'était pas actif,
- Décision de ne pas freiner si le véhicule ferroviaire ne décélère pas.

4. Procédé de freinage d'urgence suivant la revendication précédente comportant en outre les stades :
- S5 : Contrôle du point de savoir si la décélération a du véhicule ferroviaire dépasse une valeur de seuil,
- Décision de ne pas freiner si la décélération a ne dépasse pas la valeur de seuil,
- Décision de freiner si la décélération a dépasse la valeur de seuil.

5. Procédé de freinage d'urgence suivant l'une des revendications précédentes comportant en outre les stades :
- S6 : On effectue un freinage de test,
- S7 : On contrôle la décélération a pendant le freinage de test,
- On décide de freiner si la décélération a dépasse la valeur de seuil,
- On décide de ne pas freiner si la décélération a ne dépasse pas la valeur de seuil.

6. Procédé de freinage d'urgence suivant l'une des revendications précédentes comprenant en outre les stades :
- Desserrage des freins dans le cas où l'on ne peut pas décider si le véhicule ferroviaire décélère ou non pendant un freinage de test,
- Contrôle et évaluation de la variation de la décélération par desserrage des freins,
- Décision de freiner ou de ne pas freiner.

7. Procédé de freinage d'urgence suivant l'une des revendications précédentes, comportant en outre les stades :
- Contrôle de la température du dispositif de production d'une force de freinage,
- Desserrage des freins si la température du dispositif de production d'une force de freinage dépasse pendant le freinage une valeur déterminée à l'avance.

8. Dispositif de production d'une force de freinage d'un véhicule ferroviaire, qui est constitué pour effectuer le procédé suivant l'une des revendications précédentes, comportant
- un système de communication.

9. Dispositif de production d'une force de freinage suivant la revendication précédente, qui comporte en outre
- un capteur d'accélération.

10. Dispositif de production d'une force de freinage suivant l'une des revendications 8 à 9, qui comporte en outre
- un accumulateur d'énergie.

11. Dispositif de production d'une force de freinage suivant l'une des revendications 8 à 10, qui comporte en outre
- une sonde de température.

12. Véhicule ferroviaire ayant au moins un dispositif de production d'une force de freinage suivant l'une des revendications 8 à 11, qui est configuré pour effectuer le procédé suivant l'une des revendications 1 à 7.
